# EUROPÄISCHE PATENTSCHRIFT

(11) **EP 1 203 203 B1**
(45) Veröffentlichungstag und Bekanntmachung des Hinweises auf die Patenterteilung: **16.03.2005**
(21) Anmeldenummer: 00945737.5
(22) Anmeldetag: 10.06.2000
(51) Int. Cl.: G01D 5/347

(54) **KUPPLUNG UND VERWENDUNG DIESER KUPPLUNG IN EINER WINKELMESSEINRICHTUNG**
COUPLING ELEMENT AND USE OF SAID COUPLING ELEMENT IN A DEVICE FOR MEASURING ANGLES
ELEMENT D'ACCOUPLEMENT ET UTILISATION DUDIT ELEMENT DANS UN DISPOSITIF DE MESURE D'ANGLES

(30) Priorität: 01.07.1999 DE 29911508 U
(43) Veröffentlichungstag der Anmeldung: 08.05.2002
(73) Patentinhaber: Dr. Johannes Heidenhain GmbH, 83292 Traunreut (DE)
(72) Erfinder: MITTERREITER, Johann, D-83339 Chieming (DE)
(86) Internationale Anmeldenummer: PCT/EP2000/005372
(87) Internationale Veröffentlichungsnummer: WO 2001/002808

(56) Entgegenhaltungen:
- EP-A- 0 762 082
- DE-A- 19 742 114
- DE-U- 8 812 317

## Beschreibung

Die Erfindung betrifft eine Kupplung zur radialelastischen, aber drehsteifen Verbindung zweier Bauteile.

Um derartige Kupplungen kostengünstig herstellen zu können, sind sie einstückig ausgebildet und aus Blech geformt, wie beispielsweise in der DE 89 15 109 U1, der EP 0 762 081 A1 und der EP 0762 082 A1 angegeben. Diese Kupplungen bestehen aus einem ebenen Mittelteil als Basis und vier durch Umbiegen daran angeformten Laschen. Die Laschen verlaufen senkrecht zur Ebene der Basis und zwei Laschen sind jeweils gegenüberliegend parallel zueinander angeordnet und bilden ein Federparallelogramm zum radialen Ausgleich. Um die Funktion eines Federparallelogrammes zu erreichen, verlaufen die Laschen axial und sind an einer Stelle an der Basis angeformt und an einer axial davon beabstandeten Stelle mit einem der zwei Bauteile starr verbindbar. Durch diesen axialen Abstand ist die Drehsteifigkeit herabgesetzt und bei einer radialen Auslenkung eines Federparallelogrammes verbiegt sich aufgrund der axialen Längenänderung der Laschen auch zwangsläufig die Basis. Aufgrund von Inhomogenitäten der Basis verbiegt sich die Basis in der Praxis dabei nicht symmetrisch, wodurch die Basis eine Winkeldrehung auf die übrigen zwei Laschen einleitet, was eine gegenseitige Verdrehung der beiden über die Kupplung verbundenen Bauteile bewirkt.

Aufgabe der Erfindung ist es, eine Kupplung zu schaffen, die kompakt und platzsparend aufgebaut und kostengünstig herstellbar ist. Weiterhin sollen radiale Ausgleichsbewegungen der beiden über die Kupplung verbundenen Bauteile möglich sein, ohne daß unzulässige gegenseitige Verdrehungen auf die beiden Bauteile eingeleitet werden.

Diese Aufgabe wird durch eine Kupplung mit den Merkmalen des Anspruches 1 gelöst.

Weiterhin betrifft die Erfindung die Verwendung dieser Kupplung in einer Winkelmeßeinrichtung.

Wie in der DE 89 15 109 U1, der EP 0 762 081 A1 und der EP 0 762 082 A1 angeführt ist, werden Kupplungen in Winkelmeßeinrichtungen zur drehsteifen, jedoch radial und axial nachgiebigen Ankopplung der Abtasteinheit an einen Stator der Winkelmeßeinrichtung eingesetzt. Dabei führt eine gegenseitige Verdrehung der Abtasteinheit gegenüber dem Stator zu einem Meßfehler der Winkelmeßeinrichtung.

Eine weitere Aufgabe der Erfindung ist es daher, eine Winkelmeßeinrichtung anzugeben, bei der die Abtasteinheit besonders verdrehsteif, jedoch radial nachgiebig am Stator der Winkelmeßeinrichtung angekoppelt ist und durch radiale Ausgleichsbewegungen zwischen der Abtasteinheit und dem Stator möglichst keine Meßfehler resultieren.

Diese Aufgabe wird durch die Winkelmeßeinrichtung mit den Merkmalen des Anspruches 11 gelöst.

Besondere Vorteile der Erfindung sind in der nachfolgenden Beschreibung von Ausführungsbeispielen angegeben. Vorteilhafte Ausbildungen der Erfindung entnimmt man den abhängigen Ansprüchen.

Ausführungsbeispiele der Erfindung sind in den Zeichnungen dargestellt.

Es zeigt
- Figur 1: ein erstes Ausführungsbeispiel einer Kupplung in Achsrichtung betrachtet,
- Figur 2: eine Seitenansicht II-II der Kupplung gemäß Figur 1,
- Figur 3: eine räumliche Darstellung der Kupplung gemäß den Figuren 1 und 2,
- Figur 4: einen Wellenadapter mit der Kupplung gemäß dem ersten Ausführungsbeispiel,
- Figur 5: einen Teilschnitt V-V des Wellenadapters gemäß Figur 4,
- Figur 6: eine Winkelmeßeinrichtung mit der Kupplung gemäß dem ersten Ausführungsbeispiel,
- Figur 7: ein zweites Ausführungsbeispiel einer Kupplung und
- Figur 8: ein drittes Ausführungsbeispiel einer Kupplung in räumlicher Darstellung.

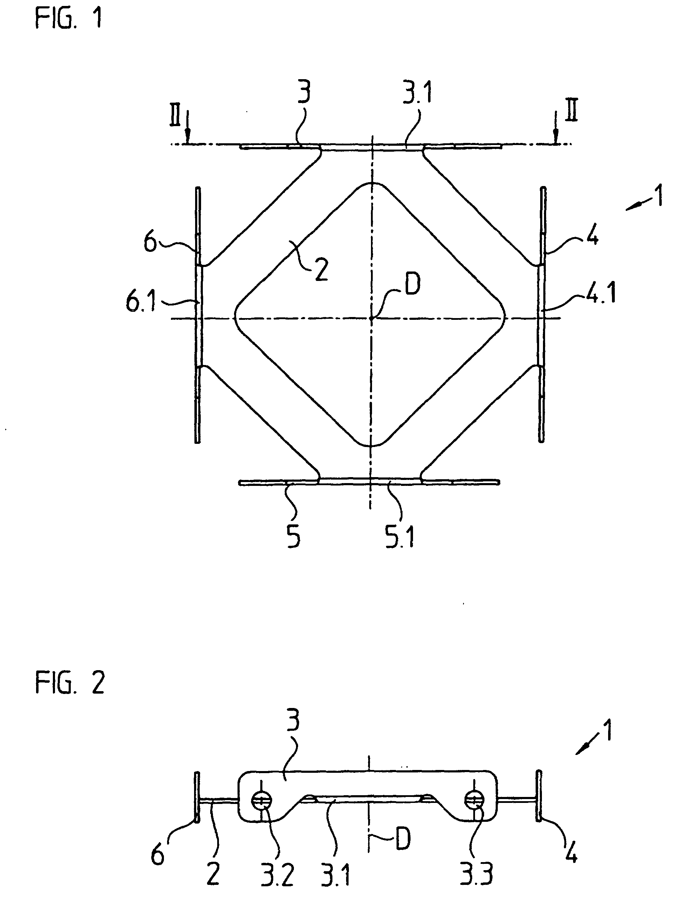

In den Figuren 1 bis 3 ist ein erstes Ausführungsbeispiel einer Kupplung 1 dargestellt. Die Kupplung 1 ist einstückig als Stanz- und Biegeteil ausgebildet und aus einem Material mit hoher Wechselsteifigkeit insbesondere Federstahl hergestellt. Sie besteht aus einem ebenen Mittenbereich als Basis 2 sowie vier daran angeformten und rechtwinklig umgebogenen Laschen 3, 4, 5, 6. Die Laschen 3, 4, 5, 6 sind zumindest weitgehend parallel zur Achse D ausgerichtet, sie sind weiterhin paarweise diametral gegenüberliegend und parallel zueinander angeordnet. Die Lasche 3 ist diametral gegenüberliegend und parallel zur Lasche 5 angeordnet. Die Lasche 4 ist ebenfalls diametral gegenüberliegend und parallel zur Lasche 6 angeordnet, wobei die Laschen 3 und 5 rechtwinklig zu den Laschen 4 und 6 verlaufen.

Jede Lasche 3, 4, 5, 6 ist mittig über einen Stützpunkt 3.1, 4.1, 5.1, 6.1 an der Basis 2 fixiert und jede Lasche 3, 4, 5, 6 weist beidseitig dieses Stützpunktes 3.1, 4.1, 5.1, 6.1 jeweils einen weiteren Stützpunkt 3.2, 3.3, 4.2, 4.3, 5.2, 5.3, 6.2, 6.3 auf. Die diametral gegenüberliegenden Stützpunkte 3.2, 3.3 und 5.2, 5.3 dienen zur starren Befestigung der Laschen 3, 5 an einem der beiden Bauteile und die diametral gegenüberliegenden Stützpunkte 4.2, 4.3 und 6.2, 6.3 dienen zur starren Befestigung der Laschen 4, 6 an dem anderen der beiden Bauteile. Alle Stützpunkte 3.1 bis 6.3 liegen vorteilhafterweise in einer gemeinsamen Ebene. Die Stützpunkte 3.1, 4.1, 5.1, 6.1 werden durch die Biegelinien zwischen der Basis 2 und den Laschen 3, 4, 5, 6 gebildet. Die Stützpunkte 3.2, 3.3, 4.2, 4.3, 5.2, 5.3, 6.2, 6.3 sind als Bohrungen zur Befestigung durch Schrauben ausgeführt, wobei die Mittelpunkte der Bohrungen gemeinsam in der mittleren Ebene der Basis 2 liegen. Es können aber auch andere starre Befestigungsarten, wie z.B. Schweißen vorgesehen sein. Die drei Stützpunkte 3.1, 3.2, 3.3; 4.1, 4.2, 4.3; 5.1, 5.2, 5.3; 6.1, 6.2, 6.3 jeder Lasche 3, 4, 5, 6 liegen vorteilhafterweise auf einer gemeinsamen Geraden, wobei die Verlängerungen der Geraden ein rechtwinkliges Viereck einschließen.

Die Basis 2 besteht vorteilhafterweise aus vier Streben, welche die Stützpunkte 3.1, 4.1 und 4.1, 5.1 und 5.1, 6.1 sowie 6.1, 3.1 in einer Ebene verbinden und ein Viereck einschließen. Die Mittellinien der Streben verlaufen dabei zumindest annähernd linear in Richtung der Wirkungslinien der Kraft, die an den Stützpunkten 3.1, 4.1, 5.1, 6.1 eingeleitet wird.

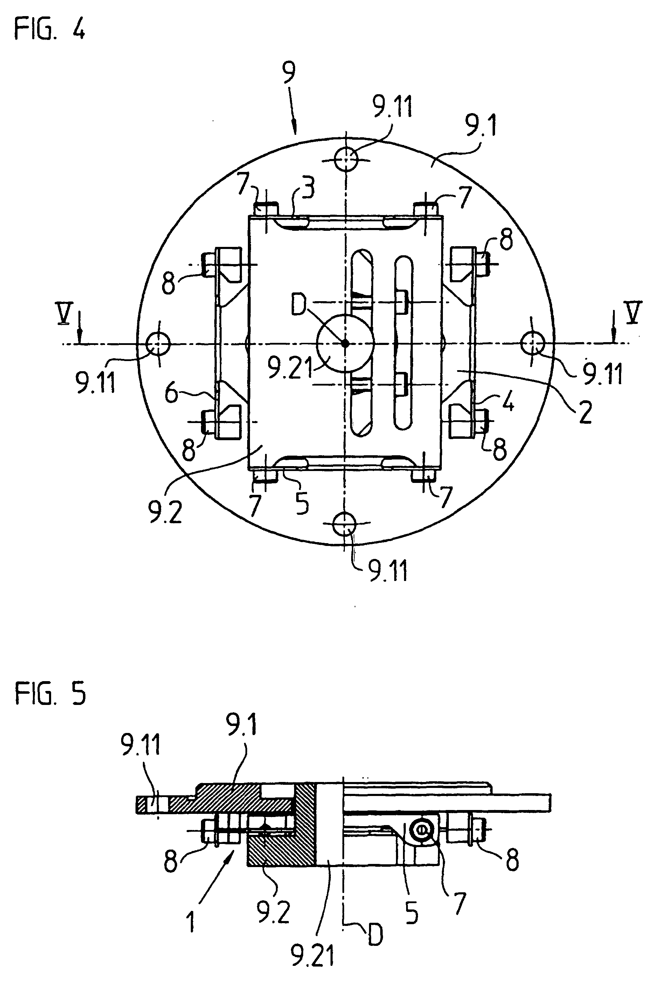

Diese beschriebene Kupplung 1 kann bei Winkelmeßeinrichtungen eingesetzt werden, indem sie zwischen der Welle einer Antriebseinrichtung und der Welle einer Winkelmeßeinrichtung eingesetzt ist. In den Figuren 4 und 5 ist ein Wellenadapter 9 mit der Kupplung 1 gemäß den Figuren 1 bis 3 dargestellt. Mit diesem Wellenadapter 9 kann die Kupplung 1 auf besonders einfache Weise zwischen die zu messende Welle der Antriebseinrichtung und der Welle der Winkelmeßeinrichtung eingesetzt werden. Der Wellenadapter 9 besteht aus einem ersten Flansch 9.1, an dem die Welle der Antriebseinrichtung starr befestigbar ist und aus einem zweiten Flansch 9.2, an dem die Welle der Winkelmeßeinrichtung starr befestigbar ist. Der erste Flansch 9.1 ist im gezeigten Beispiel eine Platte mit Bohrungen 9.11 so daß diese durch Verschrauben mit der Welle der Antriebseinrichtung fixierbar ist. Der zweite Flansch 9.2 besteht aus einer zweiten Platte mit einer zentrischen Bohrung 9.21, in der die Welle der Winkelmeßeinrichtung durch radiales Klemmen fixierbar ist.

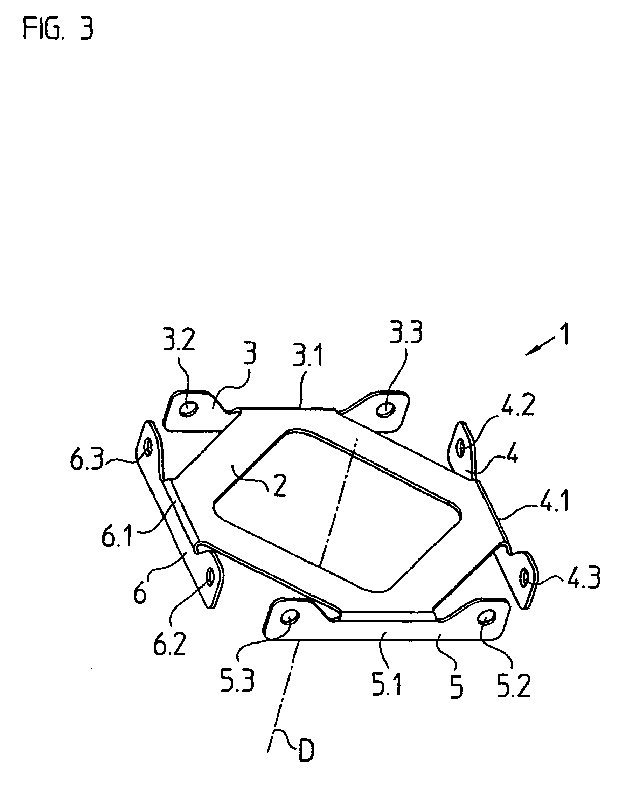

Die beiden äußeren Stützpunkte 6.2, 6.3 und 4.2, 4.3 der beiden diametral gegenüberliegenden Laschen 6 und 4 sind mit dem ersten Flansch 9.1 mittels Schrauben 8 starr verbunden und die beiden äußeren Stützpunkte 3.2, 3.3 und 5.2, 5.3 der dazu rechtwinklig verlaufenden Laschen 3 und 5 sind mittels Schrauben 7 mit dem zweiten Flansch 9.2 starr verbunden. Die beiden Flansche 9.1 und 9.2 sind über die Kupplung 1 bezogen auf die Drehachse D radial und axial nachgiebig jedoch drehsteif miteinander verbunden. Aus Gründen der Übersichtlichkeit sind die Stützpunkte der Laschen 3 bis 5 nicht mit Bezugszeichen versehen, hierzu wird auf die Figur 3 verwiesen. Ebenso sind aus Gründen der Übersichtlichkeit die Wellen der Antriebseinrichtung und der Winkelmeßeinrichtung nicht dargestellt.

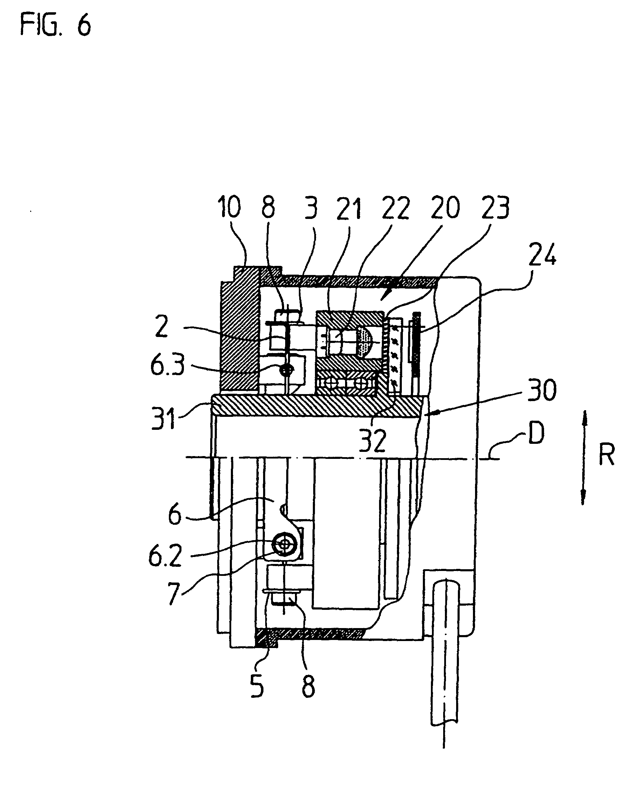

Besonders vorteilhaft ist die Verwendung der Kupplung 1 zur drehsteifen, jedoch axial und radial nachgiebigen Ankopplung einer Abtasteinheit 20 einer Winkelmeßeinrichtung an einen Stator 10 dieser Winkelmeßeinrichtung. Diese Anwendung ist in Figur 6 in einem Teilschnitt dargestellt.

in bekannter Weise besteht die Winkelmeßeinrichtung, aus einem stationären Teil, auch Montageflansch der Winkelmeßeinrichtung oder allgemein Stator 10 genannt, einer Abtasteinheit 20 und einem rotierenden Teil, auch Rotor 30 genannt. Gemessen wird die Drehlage des Rotors 30 gegenüber dem Stator 10. Der Rotor 30 besteht wiederum aus einer Welle 31, die in der Abtasteinheit 20 gelagert ist und an der eine Codescheibe 32 befestigt ist. Die Abtasteinheit 20 besteht aus einem Trägerkörper 21, an dem eine Lichtquelle 22, eine Abtastplatte 23 und eine Empfängereinheit 24 zur lichtelektrischen Abtastung der Codescheibe 32 angeordnet sind. Der Stator 10 kann auch der stationäre Teil einer Antriebseinrichtung, beispielsweise der Montageftansch eines Motors sein, an den die Abtasteinheit angebaut ist.

Die Welle 31 dieser Winkelmeßeinrichtung kann starr an eine zu messende Welle angebaut werden, da Fluchtungsfehler durch die in der Winkelmeßeinrichtung integrierten Kupplung 1 ausgeglichen werden. Hierzu sind die Laschen 4 und 6 über die Stützpunkte 4.2, 4.3 und 6.2, 6.3 an dem Stator 10 der Winkelmeßeinrichtung starr fixiert. Von den hierzu verwendeten Schrauben 7 ist nur eine dargestellt. Die Laschen 3 und 5 der Kupplung 1 sind über die Stützpunkte 3.2, 3.3 und 5.2, 5.3 an der Abtasteinheit 20 mittels Schrauben 8 starr fixiert. Aufgrund von Fluchtungsfehlern zwischen der nicht dargestellten zu messenden Welle und der Welle 31 führt die Abtasteinheit 20 gegenüber dem Stator 10 Taumelbewegungen durch, welche von der Kupplung 1 ausgeglichen werden, ohne daß die Abtasteinheit 20 dabei um die Drehachse D eine Verdrehung ausführt. Verlagert sich die Abtasteinheit 20 aufgrund von Fluchtungsfehlern bei Drehung der Welle 31 in radialer Richtung R, werden die Stützpunkte 3.2, 3.3 und 5.2, 5.3 der Laschen 3 und 5 in dieser Richtung R gegenüber den Stützpunkten 3.1 und 5.1 verlagert. Durch die symmetrische Anordnung der Stützpunkte 3.2, 3.3 gegenüber dem mittleren Stützpunkt 3.1 sowie der Stützpunkte 5.2, 5.3 gegenüber dem mittleren Stützpunkt 5.1 leitet diese Verlagerung keine Drehbewegung auf die Kupplung 1 ein. Die in der Praxis auftretenden Verlagerungen sind so gering, daß sie durch symmetrische Dehnung der Laschen 3 und 5 in Umfangsrichtung ausgeglichen werden. Bei Verlagerungen der Abtasteinheit 20 in radialer Richtung senkrecht zu R wird der Stützpunkt 6.1 gegenüber den Stützpunkten 6.2 und 6.3 radial bewegt sowie der Stützpunkt 4.1 gegenüber den Stützpunkten 4.2 und 4.3 radial bewegt. Die dabei auftretenden Abstandsänderungen zwischen den Stützpunkten 6.2, 6.1, 6.3 der Lasche 6 und zwischen den Stützpunkten 4.2, 4.1, 4.3 der Lasche 4 werden wiederum durch symmetrische Dehnung in den Laschen 6, 4 ausgeglichen. Verlagert sich die Abtasteinheit 20 aufgrund von Taumelbewegungen der Welle 31 auch in axialer Richtung, wird diese Bewegung durch die Basis 2 ausgeglichen..

Die Winkelmeßeinrichtung kann ein inkrementaler Drehgeber - vorzugsweise lichtelektrischer Art - , ein Absolutwertgeber oder ein Resolver sein.

Es hat sich gezeigt, daß das Übertragungsverhalten dieser Kupplung 1 gegenüber bekannten Kupplungen verbessert ist bei kostengünstiger Fertigung und platzsparender Einbaumöglichkeit. Die Kupplung 1 weist eine hohe Vibrationsfestigkeit aufgrund der geringen Masse, sehr gute Winkelübertragungsgenauigkeit und ein gutes thermisches Verhalten auf. Sie ist kostengünstig als Stanz-Biegeteil herstellbar und einbaubar und weist eine Unempfindlichkeit auf Materialdicken- und Festigkeitsschwankungen im Bereich der vier mittleren Verbindungsstreben auf, da diese bei radialer Auslenkung der Kupplung immer plan bleiben. Somit kann auch die radiale und axiale Steifigkeit unabhängig voneinander, durch Variation der Blechdicke bzw. durch Anbringen von Versteifungsbiegungen beispielsweise in Form von Sicken oder Umbördelungen in der Basis 2 leicht optimiert werden.

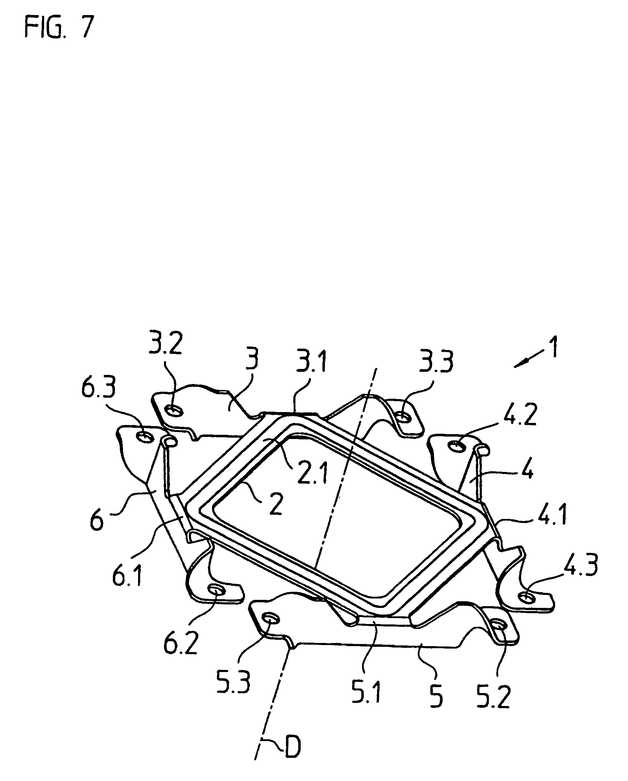

In Figur 7 ist ein zweites Ausführungsbeispiel einer Kupplung 1 dargestellt. Da sie im wesentlichen dem ersten Ausführungsbeispiel entspricht, werden die gleichen Bezugszeichen verwendet, und die Beschreibung auf die Unterschiede beschränkt. Wird eine besonders hohe axiale Steifigkeit gefordert, kann die Basis 2 durch Einbringen von Sicken 2.1 mechanisch verstärkt werden. Wird eine axiale Befestigung der gegenüber der Basis rechtwinklig umgebogenen Blech-Laschen 3, 4, 5, 6 gefordert, können die die Stützpunkte 3.2, 3.3, 4.2, 4.3, 5.2, 5.3, 6.2, 6.3 aufweisenden Enden in die Ebene der Basis 2 umgebogen werden. Alle Stützpunkte 3.1 bis 6.3 (Mittelpunkte der Befestigungsstellen) liegen wiederum in einer gemeinsamen Ebene.

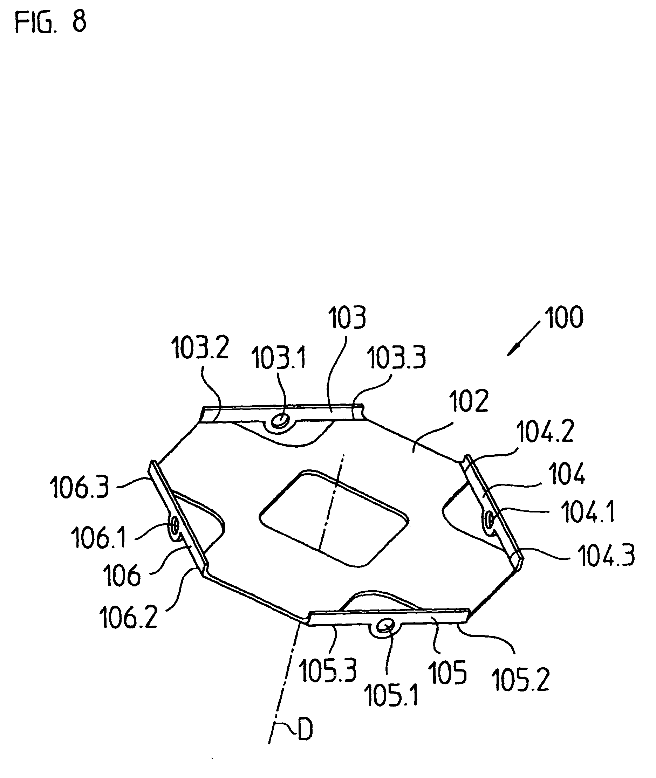

Das weitere Ausführungsbeispiel gemäß Figur 8 zeigt eine Kupplung 100, bei der die Laschen 103 bis 106 mit ihren Enden an die Basis 102 durch rechtwinkliges Umbiegen angeformt sind, wobei die durch die Biegelinie gebildeten Stützpunkte 103.2, 103.3, 104.2, 104.3, 105.2, 105.3, 106.2, 106.3 in einer gemeinsamen Ebene liegen, in der auch die symmetrisch zwischen diesen Stützpunkten 103.2 bis 106.3 angeordneten weiteren Stützpunkte 103.1 , 104.1, 105.1, 106.1 liegen. Die mittleren Stützpunkte 103.1, 105.1 der parallel gegenüberliegenden Laschen 103, 105 dienen zur Befestigung an einem der Bauteile. (z.B. erster Flansch 9.1 gemäß Figur 4 oder Stator 10 gemäß Figur 6) und die mittleren Stützpunkte 104.1, 106.1 der parallel gegenüberliegenden weiteren Laschen 104, 106 dienen zur Befestigung an dem weiteren der beiden Bauteile (z.B. zweiter Flansch 9.2 gemäß Figur 4 oder Abtasteinheit 20 gemäß Figur 6).

In nicht gezeigter Weise können die in den Figuren 3, 7 und 8 dargestellten Details der Kupplungen 1, 100 auch beliebig miteinander kombiniert werden, so kann eine Kupplung beispielsweise zwei gegenüberliegende Laschen 3, 5 gemäß Figur 3 und zwei dazu senkrecht angeordnete gegenüberliegende Laschen 104,106 gemäß Figur 8 aufweisen.

Die beschriebenen Kupplungen 1 und 100 sind optimal dimensioniert, wenn alle Stützpunkte (3.1 bis 6.3, 103.1 bis 106.3) auf einer gemeinsamen Geraden liegen und weiter alle Stützpunkte (3.1 bis 6.3, 103.1 bis 106.3) aller Laschen (3, 4, 5, 6; 103, 104, 105, 106) in einer gemeinsamen Ebene liegen. Aus Gründen der zur Verfügung stehenden Befestigungsmöglichkeiten kann es erforderlich sein, die zentrischen Stützpunkte geringfügig axial (parallel zur Achse D) versetzt zu den weiteren Stützpunkten anzuordnen. Die erfindungsgemäße Wirkung der Kupplung bleibt erhalten, wenn die Biegesteifigkeit der Laschen 3, 4, 5, 6 jeweils zwischen dem zentrischen Stützpunkt 3.1, 4.1, 5.1, 6.1 und der Verbindungslinie der beiden weiteren Stützpunkte 3.2, 3.3, 4.2, 4.3, 5.2, 5.3, 6.2, 6.3 (Verlauf der Laschen in axialer Richtung, also parallel zur Achse D) erheblich größer ist, als die Biegesteifigkeit zwischen dem zentrischen Stützpunkt 3.1, 4.1, 5.1, 6.1 und den beiden weiteren Stützpunkten 3.2, 3.3, 4.2, 4.3, 5.2, 5.3, 6.2, 6.3 (Verlauf der Laschen in Umfangsrichtung, also quer zur Achse D), so daß sich bei einer radialen Verlagerung der weiteren Stützpunkte gegenüber dem zentrischen Stützpunkt die Laschen jeweils zwischen den beiden weiteren (äußeren) Stützpunkten verbiegen und somit dehnen.

## Patentansprüche

1. Kupplung (1, 100) zur radialelastischen aber drehsteifen Verbindung zweier Bauteile (9.1, 9.2; 10, 20), bestehend aus einem einstückig geformten Blech mit
- einer Basis (2, 102),
- mehreren an die Basis (2, 102) angeformten Laschen (3, 4, 5, 6; 103, 104, 105, 106) wobei,
- zumindest eine der Laschen (4, 6; 104, 106) an einem der zwei Bauteile (9. 1; 10) starr befestigbar ist und eine zumindest weitere der Laschen (3, 5; 103, 106) am anderen der zwei Bauteile (9.2; 20) starr befestigbar ist, und,
- jede Lasche (3 bis 6, 103 bis 106) drei in Umfangsrichtung voneinander beabstandete Stützpunkte (3.1 bis 6.3. 103.1 bis 106.3) aufweist und,
- jeweils einer der Stützpunkte (3.1, 4.1, 5.1. 6.1, 103.1, 104.1, 105.1, 106.1) in Umfangsrichtung zentrisch zwischen den beiden anderen Stützpunkten (3.2, 3.3, 4.2, 4.3, 5.2, 5.3, 6.2, 6.3; 103.2, 103.3, 104.2, 104.3, 105.2, 105.3, 106.2, 106.3) liegt und
- der zentrische Stützpunkt (3.1. 4.1. 5.1. 6.1) die Verbindung der Lasche (3. 4, 5, 6) zur Basis (2) bildet und die beiden weiteren Stützpunkte (3.2. 3.3, 4.2, 4.3, 5.2, 5.3, 6.2, 6.3) mit einem der beiden Bauteile (9.1, 9.2; 10, 20) starr verbindbar ist oder der zentrische Stützpunkt (103.1. 104.1, 105.1, 106.1) starr mit einem der beiden Bauteile (9.1, 9.2: 10, 20) verbindbar ist und die beiden weiteren Stützpunkte (103.2, 103.3, 104.2, 104.3, 105.2, 105.3, 106.2, 106.3) die Verbindung der Lasche (103, 104, 105, 106) zur Basis (102) bilden, **dadurch gekennzeichnet, daß**
die Biegesteifigkeit der Laschen (3, 4, 5, 6; 103, 104, 105. 106) jeweils zwischen dem zentrischen Stützpunkt (3.1, 4.1, 5.1. 6.1; 103.1, 104.1. 105.1, 106.1) und der Verbindungslinie der beiden weiteren Stützpunkte (3.2, 3.3, 4.2, 4.3. 5.2. 5.3. 6.2, 6.3; 103.2, 103.3. 104.2, 104.3, 105.2. 105.3. 106.2. 106.3 ) erheblich größer ist, als die Biegesteifigkeit zwischen dem zentrischen Stützpunkt (3.1, 4.1, 5.1. 6.1; 103.1. 104.1, 105.1. 106.1) und den beiden weiteren Stützpunkten (3.2, 3.3, 4.2, 4.3, 5.2, 5.3, 6.2, 6.3; 103.2, 103.3, 104.2, 104.3. 105.2, 105.3, 106.2, 106.3).

2. Kupplung nach Anspruch 1, **dadurch gekennzeichnet, daß** alle Stützpunkte (3.1 bis 6.3, 103.1 bis 106.3) aller Laschen (3 bis 6, 103 bis 106) in einer gemeinsamen Ebene liegen.

3. Kupplung nach Anspruch 1 oder 2, **dadurch gekennzeichnet, daß**
- vier Laschen (3 bis 6, 103 bis 106) an die Basis (2, 102) angeformt sind, indem sie gegenüber der Basis (2, 102) um 90° umgebogen sind,
- die Biegestelle zumindest einen der Stützpunkte (3.1, 4.1, 5.1, 6.1, 103.2, 103.3, 104.2, 104.3, 105.2, 105.3, 106.2, 106.3) bildet,
- jeweils zwei Laschen (3, 5; 4, 6; 103, 105; 104, 106) gegenüberliegend und parallel zueinander verlaufend angeordnet sind und ein Laschenpaar bilden,
- die zwei Laschenpaare rechtwinklig zueinander verlaufen,
- die Stützpunkte (3.1 bis 6.3, 103.1 bis 106.3) aller Laschen (3 bis 6, 103 bis 106) in der Ebene der Basis (2, 102) liegen.

4. Kupplung nach einem der vorhergehenden Ansprüche, **dadurch gekennzeichnet, daß** die Basis (2, 102) axialelastisch ausgebildet ist.

5. Kupplung nach einem der vorhergehenden Ansprüche, **dadurch gekennzeichnet, daß** die axiale Elastizität der Basis (2, 102) durch Biegungen , insbesondere Sicken erhöht ist.

6. Kupplung nach einem der vorhergehenden Ansprüche, **dadurch gekennzeichnet, daß** die Stützpunkte zur starren Befestigung der Laschen (3 bis 6, 103 bis 106) an den beiden Bauteilen (9.1, 9.2; 10, 20) Bohrungen (3.2, 3.3, 4.2, 4.3, 5.2, 5.3, 6.2, 6.3; 103.1, 104.1, 105.1, 106.1) sind.

7. Kupplung nach einem der vorhergehenden Ansprüche, **dadurch gekennzeichnet, daß** zwei parallel gegenüberliegende erste Laschen (4, 6) an einem ersten Flansch (9.1) eines Wellenadapters (9) und zwei zu den ersten Laschen (4, 6) senkrecht verlaufende parallel einander gegenüberliegende zweite Laschen (3, 5) an einem zweiten Flansch (9.2) des Wellenadapters (9) befestigt sind.

8. Kupplung nach Anspruch 7, **dadurch gekennzeichnet, daß** jeder der Flansche (9.1, 9.2) Mittel (9.11. 9.21) zur starren Befestigung einer Welle aufweist.

9. Kupplung nach Anspruch 8, **dadurch gekennzeichnet, daß** zumindest einer der Flansche (9.2) eine Bohrung (9.21) zur insbesondere radialen Klemmung einer Welle aufweist.

10. Kupplung nach Anspruch 9, **dadurch gekennzeichnet, daß** in der Bohrung (9.21) des Flansches (9.2) eine Welle einer Winkelmeßeinrichtung geklemmt ist.

11. Winkelmeßeinrichtung mit einer an einer Abtasteinheit (20) drehbar gelagerten Welle (31) und einer Kupplung (1) gemäß einem der vorhergehenden Ansprüche 1 bis 6, wobei die Abtasteinheit (20) mittels dieser Kupplung (1) an einem Stator (10) drehsteif, jedoch radialelastisch angekoppelt ist.

## Claims

1. Coupling element (1, 100) for connecting two components (9.1, 9.2; 10, 20) in a radially resilient but torsion-proof manner, and comprising a metal sheet which is shaped in one piece and has
- a base (2, 102),
- a plurality of brackets (3, 4, 5, 6; 103, 104, 105, 106) formed on the base (2, 102),
- at least one of the brackets (4, 6; 104, 106) being able to be rigidly fastened to one of the two components (9.1; 10) and at least one further bracket (3, 5; 103, 106) being able to be rigidly fastened to the other of the two components (9.2; 20) ,
- each bracket (3 to 6, 103 to 106) having three support points (3.1 to 6.3, 103.1 to 106.3) which are spaced apart from one another in the circumferential direction, and
- respectively one of the support points (3.1, 4.1, 5.1, 6.1, 103.1, 104.1, 105.1, 106.1) lying centrally in the circumferential direction between the two other support points (3.2, 3.3, 4.2, 4.3, 5.2, 5.3, 6.2, 6.3; 103.2, 103.3, 104.2, 104.3, 105.2, 105.3, 106.2, 106.3), and
- the centre support point (3.1, 4.1, 5.1, 6.1) forming the connection of the bracket (3, 4, 5, 6) to the base (2), and the two further support points (3.2, 3.3, 4.2, 4.3, 5.2, 5.3, 6.2, 6.3) being able to be rigidly connected to one of the two components (9.1, 9.2; 10, 20), or the centre support point (103.1, 104.1, 105.1, 106.1) being able to be rigidly connected to one of the two components (9.1, 9.2; 10,20) and the two further support points (103.2, 103.3, 104.2, 104.3, 105.2, 105.3, 106.2, 106.3) forming the connection of the bracket (103, 104, 105, 106) to the base (102),
**characterised in that**
the flexural strength of the brackets (3, 4, 5, 6; 103, 104, 105, 106) between the centre support point (3.1, 4.1, 5.1, 6.1; 103.1, 104.1, 105.1, 106.1) and the connecting line of the two further support points (3.2, 3.3, 4.2, 4.3, 5.2, 5.3, 6.2, 6.3; 103.2, 103.3, 104.2, 104.3, 105.2, 105.3, 106.2, 106.3) is in each case considerably greater than the flexural strength between the centre support point (3.1, 4.1, 5.1, 6.1; 103.1, 104.1, 105.1, 106.1) and the two further support points (3.2, 3.3, 4.2, 4.3, 5.2, 5.3, 6.2, 6.3; 103.2, 103.3, 104.2, 105.2, 105.3, 106.2, 106.3).

2. Coupling element according to claim 1, **characterised in that** all the support points (3.1 to 6.3, 103.1 to 106.3) of all the brackets (3 to 6, 103 to 106) lie in a common plane.

3. Coupling element according to claim 1 or 2,
**characterised in that**
- four brackets (3 to 6, 103 to 106) are formed on the base (2, 102) by being bent over by 90° with respect to the base,
- the bending point forms at least one of the support points (3.1, 4.1, 5.1, 6.1, 103.2, 103.3, 104.2, 104.3, 105.2, 105.3, 106.2, 106.3),
- respectively two brackets (3, 5; 4, 6; 103, 105; 104, 106) are arranged lying opposite one another and extending parallel to one another and form a pair of brackets,
- the two pairs of brackets extend at a right angle to each other,
- the support points (3.1 to 6.3, 103.1 to 106.3) of all the brackets (3 to 6, 103 to 106) lie in the plane of the base (2, 102).

4. Coupling element according to one of the preceding claims, **characterised in that** the base (2, 102) is configured axially resilient.

5. Coupling element according to one of the preceding claims, **characterised in that** the axial resilience of the base (2, 102) is increased by bent portions, especially beads.

6. Coupling element according to one of the preceding claims, **characterised in that** the support points for the rigid fastening of the brackets (3 to 6, 103 to 106) to the two components (9.1, 9.2; 10, 20) are bores (3.2, 3.3, 4.2, 4.3, 5.2, 5.3, 6.2, 6.3; 103.1, 104.1, 105.1, 106.1).

7. Coupling element according to one of the preceding claims, **characterised in that** two first brackets (4,6), which lie parallel and opposite one another, are fastened to a first flange (9.1) of a shaft adapter (9) and two second brackets (3, 5), which lie parallel and opposite one another and extend perpendicular to the first brackets (4, 6), are fastened to a second flange (9.2) of the shaft adapter (9).

8. Coupling element according to claim 7, **characterised in that** each of the flanges (9.1, 9.2) has means (9.11, 9.21) for the rigid fastening of a shaft.

9. Coupling element according to claim 8, **characterised in that** at least one of the flanges (9.2) has a bore (9.21), in particular for the radial clamping of a shaft.

10. Coupling element according to claim 9, **characterised in that** a shaft of an angle-measuring device is clamped in the bore (9.21) of the flange (9.2).

11. Angle-measuring device having a shaft (31), which is rotatably mounted on a scanning unit (20), and a coupling element (1) in accordance with one of the preceding claims 1 to 6, wherein the scanning unit (20) is coupled to a stator (10) by means of this coupling element (1) in a torsion-proof but radially resilient manner.

## Revendications

1. Elément d'accouplement (1, 100) pour relier de manière élastique dans la direction radiale, mais rigide en torsion, deux organes de machine (9.1, 9.2, 10, 20), constitué d'une pièce monobloc en tôle avec
• une base (2, 102),
• plusieurs pattes (3, 4, 5, 6 ; 103, 104, 105, 106) réalisées d'une pièce avec la base (2, 102),
• au moins une des pattes (4, 6 ; 104, 106) pouvant être fixée rigidement à l'un (9.1 ; 10) des deux organes de machine et au moins une autre patte (3, 5 ; 103, 105) ) pouvant être fixée rigidement à l'autre (9.2 ; 20) des deux organes de machine,
• chaque patte (3 à 6 ; 103 à 106) présentant trois points d'appui mutuellement espacés dans la direction circonférentielle
• l'un des points d'appui (3.1, 4.1, 5.1, 6.1 ; 103.1, 104.1, 105.1, 106.1), étant disposé chaque fois de manière centrée dans la direction circonférentielle entre les deux autres points d'appui (3.2, 3.3, 4.2, 4.3, 5.2, 5.3, 6.2, 6.3 ; 103.2, 103.3, 104.2, 104.3, 105.2, 105.3, 106.2, 106.3 et
• le point d'appui central (3.1, 4.1, 5.1, 6.1) constituant la liaison de la patte (3, 4, 5, 6) à la base (2) et les deux autres points d'appui (3.2, 3.3, 4.2, 4.3, 5.2, 5.3, 6.2, 6.3) pouvant être liés rigidement à l'un des deux organes de machine (9.1, 9.2 ; 10, 20) ou le point d'appui central (103.1, 104.1, 105.1, 106.1) pouvant être lié rigidement à l'un deux organes de machine (9.1, 9.2 ; 10, 20) et les deux autres points d'appui (103.2, 103.3, 104.2, 104.3, 105.2, 105,3, 106.2, 106.3) formant la liaison de la patte (103, 104, 105, 106) à la base (102),
• **caractérisé par le fait que**
• la rigidité de flexion des pattes (3, 4, 5, 6, ; 103, 104, 105, 106) entre le point d'appui central (3.1, 4.1, 5.1, 6.1 ; 103.1, 104.1, 105.1, 106.1) et la ligne reliant les deux autres points d'appui (3.2, 3.3, 4.2, 4.3, 5.2, 5.3, 6.2, 6.3 ; 103.2, 103.3, 104.2, 104.3, 105.2, 105,3, 106.2, 106.3) est considérablement plus grande que la rigidité de flexion entre le point d'appui central (3.1, 4.1, 5.1, 6.1 ; 103.1, 104.1, 105.1, 106.1) et les deux autres points d'appui (3.2, 3.3, 4.2, 4.3, 5.2, 5.3, 6.2, 6.3 ; 103.2, 103.3, 104.2, 104.3, 105.2, 105,3, 106.2, 106.3).

2. Elément d'accouplement selon la revendication 1, **caractérisé par le fait que** tous les points d'appui (3.1 à 6.3 ; 103.1 à 103.3) de toutes les pattes (3 à 6 ; 103 à 106) sont situés dans un plan commun.

3. Elément d'accouplement selon la revendication 1 ou 2,
**caractérisé par le fait que**
• quatre pattes (3 à 6 ; 103 à 106) sont réalisées d'une pièce avec la base (2, 102), les pattes étant pliées à 90° par rapport à la base (2, 1002),
• le point de pliage constitue au moins un des points d'appui (3.1, 4.1, 5.1, 6.1 ; 103.2, 103.3, 104.2, 104.3, 105.2, 105,3, 106.2, 106.3),
• chaque fois deux pattes (3, 4, 5, 6 ; 103, 104, 105, 106) sont disposées en vis-à-vis et parallèlement l'une à l'autre et forment une paire de pattes,
• les deux paires de pattes sont mutuellement perpendiculaires,
• les points d'appui 3.1 à 6.3, 103. à 106.3) de toutes les pattes (3 à 6 ; 103 à 106) sont situés dans le plan de la base (2, 102).

4. Elément d'accouplement selon une des revendications précédentes, **caractérisé par le fait que** la base (2, 102) est élastique dans la direction axiale.

5. Elément d'accouplement selon une des revendications précédentes, **caractérisé par le fait que** l'élasticité axiale de la base (2, 102) est augmentée par des courbes, plus particulièrement par des moulures.

6. Elément d'accouplement selon une des revendications précédentes, **caractérisé par le fait que** les points d'appui, pour la fixation rigide des pattes (3 à 6 ; 103 à 106) aux deux éléments (9.1, 9.2 ; 10, 20) sont des trous (3.2, 3.3, 4.2, 4.3, 5.2, 5.3, 6.2, 6.3 ; 103.2, 103.3, 104.2, 104.3, 105.2, 105,3, 106.2, 106.3).

7. Elément d'accouplement selon une des revendications précédentes, **caractérisé par le fait que** deux premières pattes (4, 6) parallèles situées en vis-à-vis sont fixées à une première bride (9.1) d'un adaptateur d'arbre (9) et deux pattes (3, 5) parallèles, disposées en vis-à-vis et perpendiculaires aux premières pattes (4, 6) sont fixées à une deuxième bride (9.2) de l'adaptateur d'arbre (9).

8. Elément d'accouplement selon la revendication 7, **caractérisé par le fait que** chacune des brides (9.1, 9.2) présente des moyens (9.11, 9.21) pour la fixation rigide d'un arbre.

9. Elément d'accouplement selon la revendication 8, **caractérisé par le fait qu'**au moins une des brides (9.2) présente un trou (9.21) pour le blocage, notamment radial, d'un arbre.

10. Elément d'accouplement selon la revendication 9, **caractérisé par le fait qu'**un arbre d'un dispositif de mesure d'angle est bloqué dans le trou (9.21) de la bride (9.2).

11. Dispositif de mesure d'angle avec un arbre (31) monté tournant sur une unité de palpage (20) et un élément d'accouplement (1) selon une des revendications 1 à 6 précédentes, l'unité de palpage (20) étant couplée de manière rigide en torsion, mais avec élasticité radiale, à un stator (10) à l'aide dudit élément d'accouplement (1).
